# EUROPÄISCHE PATENTSCHRIFT

(11) **EP 1 599 928 B1**
(45) Veröffentlichungstag und Bekanntmachung des Hinweises auf die Patenterteilung: **28.08.2013**
(21) Anmeldenummer: 04712996.0
(22) Anmeldetag: 20.02.2004
(51) Int. Cl.: H02K 1/27, H02K 1/30

(54) **ELEKTRISCHE MASCHINE MIT EINEM PERMANENTMAGNET**
ELECTRIC MACHINE COMPRISING A PERMANENT MAGNET
MOTEUR ELECTRIQUE COMPORTANT UN AIMANT PERMANENT

(30) Priorität: 26.02.2003 DE 10308142; 15.07.2003 DE 10331958
(43) Veröffentlichungstag der Anmeldung: 30.11.2005
(73) Patentinhaber: ROBERT BOSCH GMBH, 70442 Stuttgart (DE)
(72) Erfinder: ASCHOFF, Joerg, 77815 Buehl (DE); LOTT, Thomas, 77815 Bühl (DE); WEHRLE, Andreas, 77652 Offenburg (DE); WALTER, Gerd, 67410 Rohrwiller (FR)
(86) Internationale Anmeldenummer: PCT/DE2004/000316
(87) Internationale Veröffentlichungsnummer: WO 2004/084376

(56) Entgegenhaltungen:
- DE-A- 4 401 847
- FR-A- 2 723 490
- US-A- 4 745 319
- US-A- 5 483 116
- US-B1- 6 282 053

## Beschreibung

### Stand der Technik

Elektrische Maschinen sind aus dem Stand der Technik wohl bekannt. Dabei sind beispielsweise permanent magnetisch erregte Gleichstrommotoren bekannt, welche elektronisch oder mechanisch kommutierbar sind. Hierbei können zwei Ausführungsarten unterschieden werden, nämlich die eine Ausführungsart, bei dem die Permanentmagnete am Stator angeordnet sind und eine andere Ausführungsart, bei der die Permanentmagnete am Rotor angebracht sind. Das kommutierte Magnetfeld zwischen dem Permanentmagneten und den am anderen Bauteil angeordneten Spulen bewirken das Drehmoment auf die Rotorwelle.

Zur Befestigung des Permanent-Ringmagneten auf einem Rotorkörper der Rotorwelle ist beispielsweise aus der EP 0 872 945 A1 bekannt, eine Klebeverbindung zu verwenden. Aufgrund von unterschiedlichen Temperaturausdehnungen der unterschiedlichen Materialien von Magnet, Klebstoff und Rotorkörper sowie aufgrund von Fertigungstoleranzen und aufgrund des bei Verwendung eines Klebstoffs notwendigen Abstands zwischen dem Magneten und der Rotorwelle/-körper, treten einerseits an den Verbindungsflächen große Materialspannungen der einzelnen Materialien (Magnet, Klebstoff, Welle) auf. Im Betrieb der elektrischen Maschine können andererseits jedoch große Temperaturunterschiede auftreten, was aufgrund der unterschiedlichen Ausdehnungskoeffizienten der Materialien zu Rissen bis hin zum Materialbruch führt, sodass eine Übertragung von Drehmoment vom Magneten auf die Rotorwelle nicht mehr möglich ist. Des Weiteren werden die mechanischen Eigenschaften des Klebstoffs mit zunehmender Temperatur schlechter. Der Klebstoff stellt aktuell das kritischste Glied im Verbund dar.

Mit der US 6,282,053 B1 ist ein Spindelantrieb bekannt geworden, bei dem ein ringförmiger Permanentmagnet auf einem Rotor angeordnet ist. Dabei wird der Permanentmagnet mit elastischen Elementen in Axialrichtung verspannt.

Die US 4,745,319 und die DE 44 01 847 A1 zeigt einen Elektromotor bei dem mehrere schalenförmige Magnete in der inneren Gehäusewand eines Stators befestigt sind. Dabei sind in Umfangsrichtung zwischen den Magneten elastische Halteelemente angeordnet, die eine tangentiale Kraft auf die Magneten ausüben.

### Vorteile der Erfindung

Die erfindungsgemäße elektrische Maschine mit den Merkmalen des Anspruchs 1 weist demgegenüber den Vorteil auf, dass ein Permanentmagnet am Rotor spielfrei konzentrisch zur Rotorwelle gehalten werden kann. Dies ist mittels der erfindungsgemäßen Halteelemente möglich, welche in Axialrichtung und/oder in Radialrichtung des Rotors liegende Anlageflächen des Permanentmagneten elastisch lagern. Somit können temperaturbedingte Längenänderungen der unterschiedlichen Materialien durch die elastische Lagerung des Permanentmagneten an den Halteelementen ausgeglichen werden, ohne dass es zu Rissen oder zu Materialbrüchen kommt Ein weiterer Vorteil des Einspannens des Permanentmagneten zwischen zwei an seinen beiden Enden liegenden Halteelementen liegt darin, dass zur Drehmomentübertragung beide Enden des Permanentmagneten herangezogen werden, sodass die Drehmomentübertragung vom Permanentmagneten über die Halteelemente auf die Rotorwelle erfolgt. Darüber hinaus können durch die erfindungsgemäße beidseitige elastische Lagerung des Permanentmagneten auch gegebenenfalls. auftretende Herstellungstoleranzen ausgeglichen werden. Dadurch kann insbesondere auf eine aufwendige und teure Feinbearbeitung der axialen und radialen Anlagenflächen des Permanentmagneten verzichtet werden. Die Zentrierelemente weisen eine sehr flach verlaufende, näherungsweise lineare Federkennlinie auf, wodurch die Radialkraft auf dem Permanentmagnetring auch bei größeren Federwegen zur Kompensation der Wärmeausdehnung oder Fertigungstoleranzen nahezu konstant bleibt. Dies schützt den Permanentmagneten vor einer Zerstörung, da dieser gegenüber einer radialen Krafteinwirkung besonders empfindlich ist. Daher kann die Ausführung des Zentrierelements an den für den entsprechenden Anwendungsfall auftretenden Federweg angepasst werden.

Die Unteransprüche zeigen vorteilhafte Weiterbildungen der Erfindung. Vorzugsweise weisen die Halteelemente jeweils einen integral gebildeten federnden Bereich auf. Besonders bevorzugt sind die federnden Bereiche dabei am in Radialrichtung des Halteelements äußeren Umfang angeordnet, um die axialen Anlageflächen des Permanentmagneten zu lagern. Das Halteelement kann dabei beispielsweise wie eine Tellerfeder ausgebildet sein oder es ist auch möglich, dass beispielsweise in Radialrichtung verlaufende Schlitze vorgesehen sind, um jeweils separate Federelemente zu bilden.

Um zusätzlich noch zur axialen elastischen Lagerung des Permanentmagneten eine radiale Zentrierung des Permanentmagneten bezüglich der Rotorwelle zu ermöglichen, sind die Anlageflächen des Permanentmagneten vorzugsweise sich verjüngend ausgebildet. Eine andere Möglichkeit der elastischen Lagerung in Radialrichtung des Rotors kann durch die Verwendung von Federelementen realisiert werden, welche zwischen dem Rotor und dem Innenumfang des Permanentmagneten angeordnet sind. Dabei liegen die Federelemente an radialen Anlageflächen des Permanentmagneten an Beispielsweise kann dies mittels einer mehrfach geschlitzten Zentrierhülse realisiert werden.

Weiterhin bevorzugt weist eine axiale Anlagefläche des Halteelements, die mit dem Permanentmagneten im montierten Zustand in Kontakt steht, einen vorbestimmten Radius R auf, sodass möglichst nur ein im Wesentlichen linienförmiger Kontakt zwischen dem Haltelement und dem Permanentmagneten vorliegt.

Vorzugsweise ist zwischen den Anlageflächen des Permanentmagneten und dem Halteelement ein zusätzliches Reibelement, wie z.B. ein Fitzmaterial o.ä., angeordnet. Dadurch kann eine Reibung zwischen den beiden Bauteilen erhöht werden, sodass ein größeres Drehmoment übertragen werden kann. Desweiteren erwies es sich von Vorteil, zwischen Magnet und federelastischem Element eine geschlossene Scheibe zu positionieren. Die Scheibe verhindert, dass Zugspannungen infolge eines Aufweitens des federelastischen Elements auf den Magneten übertragen werden und diesen zerborsten. Die Scheibe kann weiterhin bevorzugt eine reiberhöhende Beschichtung aufweisen,

Um eine besonders lange Lebensdauer der elektrischen Maschine zu gewährleisten, sind am Halteelement bzw. am Permanentmagneten verschleißfeste und/oder reiberhöhende Beschichtungen vorgesehen. Das erfindungsgemäße Halteelement kann besonders kostengünstig durch Verwendung von Federstahl bereitgestellt werden. Das Halteelement kann beispielsweise mittels Laserschweißen, Schrumpfpassungen, Prägen an einem Bund usw., mit der Rotorwelle verbunden werden. Hierzu ist das Halteelement vorzugsweise muffenartig mit federnden Bereichen ausgebildet. Die federnden Bereiche können dabei integral mit dem Halteelement derart ausgebildet sein, dass sowohl federnde Bereiche zur Bereitstellung einer Federkraft in Axialrichtung als auch federnde Bereiche zur Bereitstellung einer Federkraft in Radialrichtung vorgesehen sind.

Weiterhin bevorzugt ist der Permanentmagnet mittels Sintern hergestellt und weist die Gestalt eines Hohlzylinders auf. Dadurch kann der Permanentmagnet sehr kostengünstig bereitgestellt werden. Da ein gesinterter Permanentmagnet sehr gut große Druckkräfte, jedoch nur geringe Zugkräfte aufnehmen kann, ist er besonders für ein Einspannen zwischen die beiden erfindungsgemäßen Halteelemente geelgnet.

Die erfindungsgemäße elektrische Maschine kommt vorzugsweise bei EC-Motoren mit geschlossenem Multipolringmagnet zum Einsatz, sodass insbesondere das nachteilige Verkleben des Magneten auf dem Rotor gemäß dem Stand der Technik nicht mehr ausgeführt werden muss. Zur Montage der Halteelemente an der Rotorwelle können weiterhin bevorzugt einander entgegengerichtete Hohlstempel verwendet werden. Hierbei können vorzugsweise an den Hohlstempeln entsprechende Lehren ausgebildet sein, um eine vorbestimmte Vorspannung über die Halteelemente auf den Magneten durch die Positionierung der Halteelemente einzustellen. Diese vorspannung kann beispielsweise anhand eines Grades einer Verbiegung der federnden Bereiche der Halteelemente bestimmt werden.

In einer weiteren Ausführung wird der Permanentmagnetring nur durch die radiale Anpresskraft der Zentrierelemente der Halteelemente gelagert. Hierbei kann vorteilhaft auf axiale Federelemente verzichtet werden.

Einen besonders großen linearen Federbereich mit flacher Kennlinie ist durch eine Spiralfeder mit radial versetzten Schlingen zu erzielen, da deren Gesamtaußendurchmesser bis zu einem Faktor 2 größer gestaltet werden kann, als deren resultierenden Innendurchmesser, wodurch über einen großen radialen Bereich eine gleichmäßige Radialkraft auf den Ringmagneten ausgeübt werden kann.

Durch die Ausbildung radialer Fortsätze am Zentrierelement kann der Permanent-Ringmagnet bei der Montage leicht montiert und anschließend durch das Anpressen mittels eines axialen Federelements, das Zentrierelement versteift werden, wodurch die radialen Vibrationen des Ringmagneten reduziert werden.

Die Ausbildung der Halteelemente ist sehr variabel und kann den jeweiligen Betriebsverhältnissen angepasst werden. So können die Halteelemente beispielsweise als zwei separate Bauteile ausgeführt sein, die den Ringmagneten direkt axial und/oder radial elastisch lagern. In einer weiteren Ausführung können diese Halteelemente aber auch integrale Bestandteile eines Rotorkörpers sein, der beispielsweise auch als magnetisches Rückschlusselement ausführbar ist. Ein solches Rückschlusselement erlaubt auch eine Magnetisierung des Ringmagnets in radialer Richtung, wohingegen bei der Magnetisierung innerhalb der Mantelflächen-Ebene ein Rückschlusselement notwendig ist. Die Haltelemente können auch als mehrteilige Bauteile ausgeführt sein, so dass ein Grundkörper des Halteelements weitere radiale und/oder axiale elastische Elemente oder Mittel zu deren Befestigung am Grundkörper oder an der Rotorwelle aufweist. Sowohl die separaten, als auch die in den Rotorkörper integrierten Halteelemente, können auf einfache Weise mittels bekannten Verbindungstechniken auf der Rotorwelle befestigt werden, beispielsweise mittels Sicherungsringe, Laserschweißen oder Presspassung.

Die erfindungsgemäße Halterung des Permanentmagnetrings ausschließlich über elastische Elemente, eignet sich zur Realisierung einer Reibkupplung der Drehmomentübertragung. Dadurch kann beispielsweise bei einem Abgriff des Sensorsignals direkt vom Arbeitsmagneten verhindert werden, dass beim Auftreten zu großer Drehmomente abtriebsseitige Getriebeteile zerstört werden. Der Drehmoment-Grenzwert kann durch die Gestaltung der axialen bzw. radialen Federelemente sowie der Reibfläche zwischen diesen und dem Permanent-Ringmagneten eingestellt werde.

### Zeichnung

Nachfolgend wird die Erfindung anhand von bevorzugten Ausführungsbeispielen in Verbindung mit der Zeichnung beschrieben, wobei gleiche Teile jeweils mit den gleichen Bezugszeichen bezeichnet sind. In der Zeichnung ist:
- Fig. 1: eine schematische Schnittansicht eines Rotors einer elektrischen Maschine gemäß einem ersten Beispiel als technologischen Hintergrund,
- Fig. 2: eine Seitenansicht des in Fig. 1 gezeigten Rotors,
- Fig. 3: eine schematische Schnittansicht eines Rotors gemäß einem zweitcn Beispiel als technologischen Hintergrund,
- Fig. 4a und 4b: schematische Schnittansichten eines Rotors gemäß einem ersten Ausführungsbeispiel der vorliegenden Erfindung,
- Fig. 5a und 5b: schematische Schnittansichten eines Rotors gemäß einem dritten Beispiel als technologischen Hintergrund,
- Fig. 6: eine schematische Schnittansicht eines Rotors gemäß einem zweiten Ausführungsbeispiel der vorliegenden Erfindung,
- Fig. 7: eine schematische Schnittansicht eines Rotors gemäß einem dritten Ausführungsbeispiel der vorliegenden Erfindung, und
- Fig. 8a bis 8f: schematische Schnittansichten eines Rotors gemäß einem vierten Ausführungsbeispiel der vorliegenden Erfindung, wobei die Fig. 8c bis 8f Varianten hiervon zeigen,
- Fig. 9: eine schematische Schnittansicht eines weiteren erfindungsgemäßen Ausführungsbeispiels mit einem Rotorkörper,
- Fig. 10: eine schematische Schnittansicht einer Variation des erfindungsgemäßen Ausführungsbeispiels aus Figur 9,
- Fig. 11a bis 11: ceine schematische Schnittansicht eines weiteren erfindungsgemäßen Ausführungsbeispiels mit einem radialen Federpaket,
- Fig. 12a bis 12d: schematische Schnittansichten weiterer erfindungsgemäßer Ausführungsbeispiele mit Zentrierelementen,
- Fig. 13: ein erfindungsgemäßes spiralförmige Zentrierelement in unverbautem Zustand,
- Fig. 14: eine typische Federkennlinie eines erfindungsgemäßen Zentrierelements,
- Fig. 15a bis 15h: schematische Schnitt- und Seitenansichten weiterer erfindungsgemäßen Ausführungsbeispielen mit Zentrierelementen.

### Beschreibung der Ausführungsbeispiele

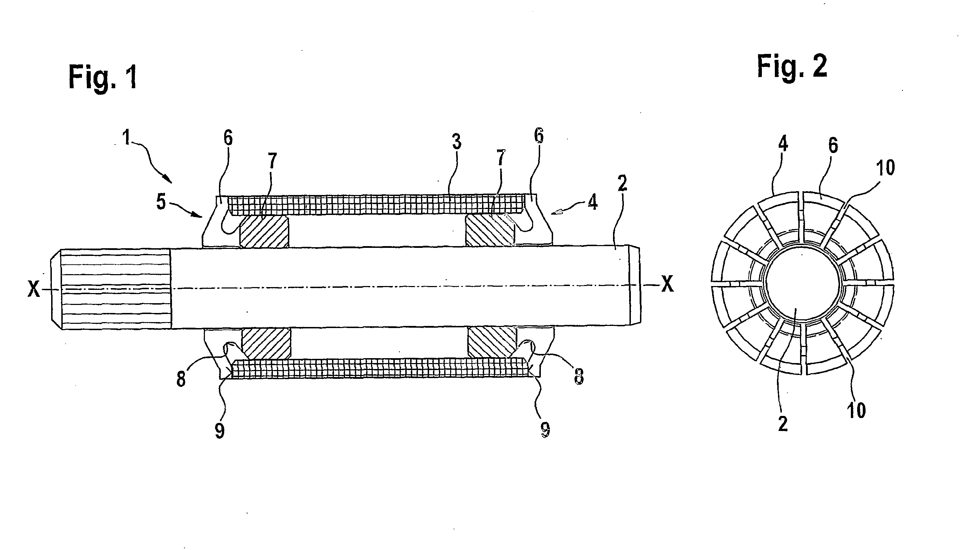

Nachfolgend wird unter Bezugnahme auf die Figuren 1 und 2 eine elektrische Maschine gemäß einem ersten Beispiel als technologischer Hintergrund beschrieben. Figur 1 zeigt einen Rotor 1, welcher eine Rotorwelle 2 und einen Permanentmagneten 3 umfasst. Der Permanentmagnet 3 ist mittels zweier Halteelemente 4, 5 an der Rotorwelle 2 befestigt. Der Permanentmagnet 3 ist aus einem gesinterten Material hergestellt und weist im Wesentlichen eine Höhlzylinderform' auf. Dabei weist der Permanentmagnet 3 an seinen in Axialrichtung X-X liegenden Enden eine zur Achse X-X senkrechte Anlagefläche 9 auf.

Die Halteelemente 4 und 5 sind gleich aufgebaut und umfassen jeweils einen federnden Bereich 6 sowie einen Haltebereich 7. Der Haltebereich 7 ist im Wesentlichen ringförmig ausgebildet und wird beispielsweise mittels einer Presspassung auf der Rotorwelle 2 befestigt. Die Halteelemente 4, 5 sind beispielsweise aus einem Federstahl hergestellt. Der elastische Abschnitt der Halteelemente 4, 5 besteht aus einer Vielzahl von Federelementen 6, welche jeweils durch Schlitze 10 voneinander getrennt sind (vgl. Fig. 2). Zur Bereitstellung einer relativ großen Federkraft in Axialrichtung X-X ist dazu an jedem Federelement eine Auskehlung 8 ausgebildet Es sei angemerkt, dass die Schlitze nicht zwingend notwendig sind. Die Schlitze bewirken eine Reduzierung der Steifigkeit gegenüber einem ungeschlitzten Federelement.

Wie aus Figur 1 ersichtlich ist, wird der Permanentmagnet dabei zwischen die beiden Halteelemente 4 und 5 eingespannt, sodass ein Reibschluss zwischen dem Permanentmagneten und jedem der Halteelemente 4, 5 ausgebildet wird, um das Drehmoment auf die Welle 2 zu übertragen. Da die Halteelemente 4, 5 an beiden Seiten des Permanentmagneten 3 angeordnet sind, wird ein ggf. auftretender Längenänderungsausgleich infolge von Wärmeeinwirkungen gleichmäßig auf beide Halteelemente 4, 5 verteilt. Ein weiterer Vorteil liegt darin, dass keine aufwendige Nachbearbeitung des Permanentmagneten 3 notwendig ist, da ggf. auftretende Toleranzen durch die Elastizität der Halteelemente 4, 5 ausgeglichen werden können. Somit kann der Permanentmagnet 3 besonders kostengünstig und in kurzer Herstellungszeit hergestellt werden.

Die axialen Anlageftächen 9 des Permanentmagneten 3 bzw. der Halteelemente 4, 5 sollen dabei einen möglichst hohen Reibwert aufweisen, sodass die axiale Kraft auf die Reibpartner möglichst klein gewählt werden kann. Der Permanentmagnet 3 ist in Axialrichtung elastisch gelagert

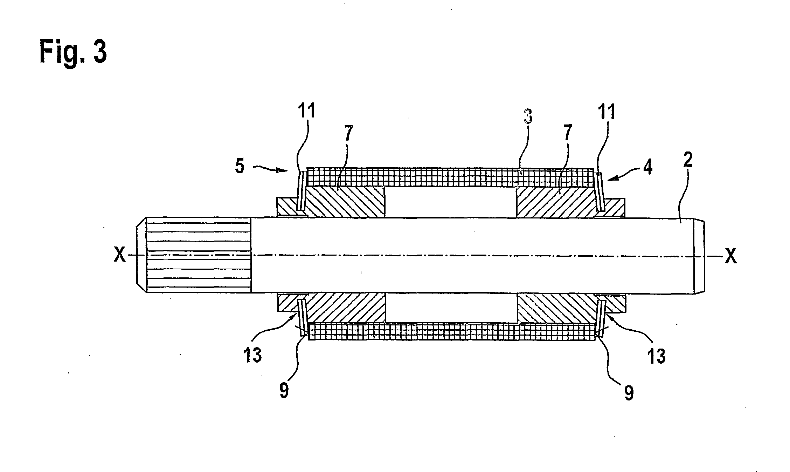

Nachfolgend wird unter Bezugnahme auf Figur 3 ein Rotor gemäß einem zweiten Beispiel als technologischer Hintergrund beschrieben. Wie in Figur 3 gezeigt, sind die Halteelemente 4, 5 gemäß dem zweiten Beispiel nicht wie beim ersten Beispiel einstückig, sondern aus zwei einzelnen Teilen gebildet. Genauer sind Tellerfedern 11 In den Halteberelchen 7 der Halteelemente 4, 5 vorgesehen, um den Permanentmagneten 3 zwischen sich zu halten. Die axiale Anlagefläche 9 des Permanentmagneten 3 ist dabei wiederum senkrecht zur Axialachse X-X ausgebildet. Hierbei sind die Halteelemente 4, 5 des zweiten Beispiels besonders kostengünstig berellstellbar, da die vorzugsweise nicht-magnetisierenden Tellerfedern 11 als Standardbauteile zugekauft werden können und in einer ringförmigen Nut 13 im Haleelement befestigbar sind. Durch die Außenmantelflächen der Haltebereiche 7 erfolgt eine radiale Zentrierung des Permanentmagneten 3. Ansonsten entspricht dieses Beispiel dem ersten Beispiel, sodass auf die dort gegebene Beschreibung verwiesen werden kann.

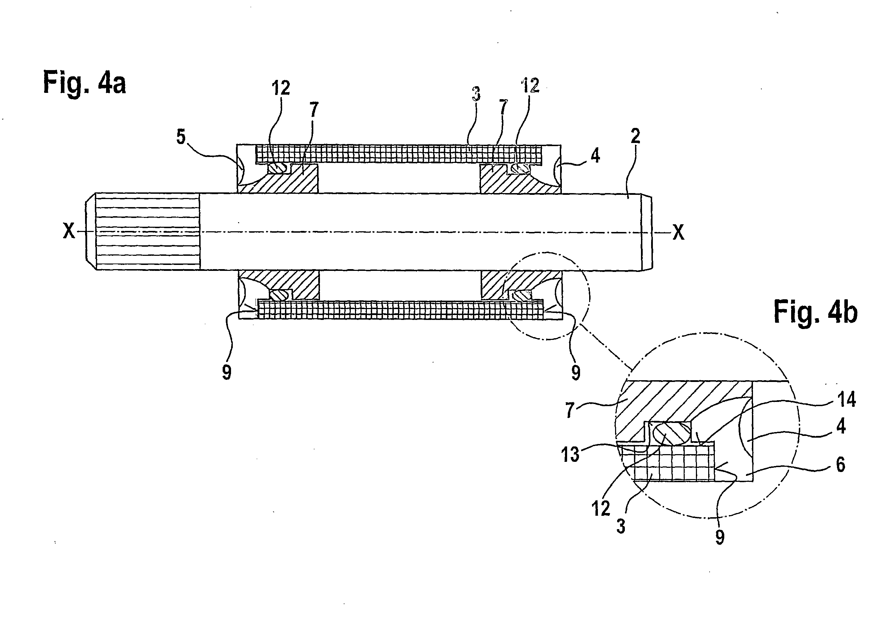

Nachfolgend wird unter Bezugnahme auf die Figuren 4a und 4b ein Rotor 1 gemäß einem ersten Ausführungsbeispiel der vorliegenden Erfindung beschrieben. Figur 4b zeigt hierbei eine Ausschnittsvergrößerung von Figur 4a. Das erste Ausführungsbeispiel entspricht im Wesentlichen dem ersten Beispiel, wobei die axialen Federelemente 11 mit den Federbereichen 6 wieder einstückig mit den Halteelemente 4, 5 gebildet sind. Die Anlagefläche der Halteelemente 4, 5 zum Permanentmagneten 3 ist dabei mit einem Radius R gebildet, sodass zwischen den federnden Bereichen 6 der Halteelemente 4, 5 und der senkrechten, axialen Anlagenfläche 9 des Permanentmagneten jeweils ein im Wesentlichen linienförmiger Kontaktbereich gebildet wird- Dadurch wird insbesondere die Hertzsche Pressung zwischen den beiden Bautellen reduziert. Weiterhin ist gemäß dem ersten Ausführungsbeispiel ein Zentrierring 12 als separates Bauteil der Halteelemente 4,5 vorgesehen, welcher in einer Ausnehmung 13 im Haltebereich 7 der Halteelemente 4,5 angeordnet ist. Der Zentrierring 12 ist aus einem elastischen Material, wie beispielsweise Gummi, oder einem elastischen Kunststoff oder einem elastischen Metall hergestellt und dient zur Zentrierung des Permanentmagneten 3 relativ zur Achse X-X. Dabei liegt der Zentrierring 12 an einer am Innenumfang des Permanentmagneten 3 gebildeten radialen Anlagefläche 14. Ansonsten entspricht dieses Aüsführungsbeispiel den vorher beschriebenen Beispielen, sodass auf die dort gegebene Beschreibung verwiesen werden kann.

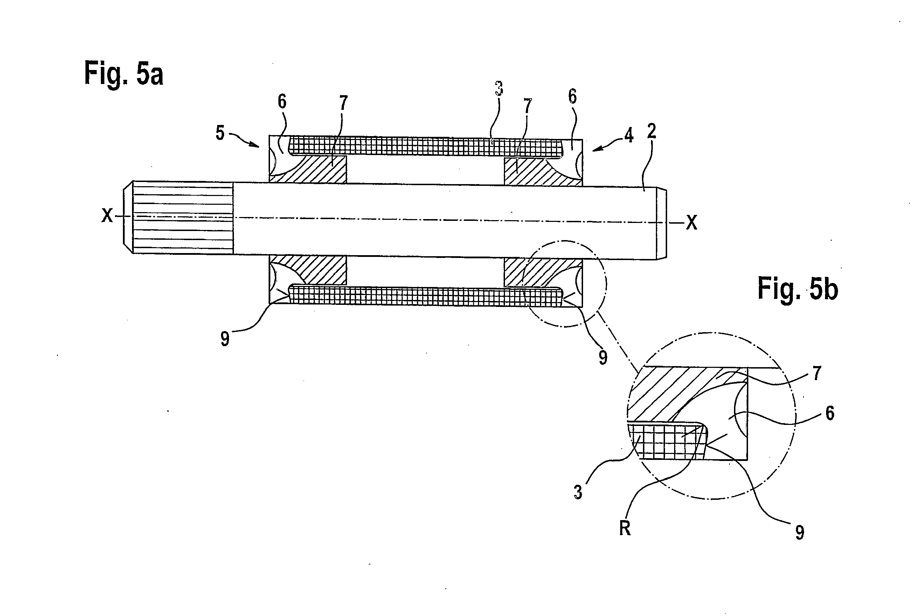

Nachfolgend wird unter Bezugnahme auf die Figuren 5a und 5b ein Rotor gemäß einem dritten Beispiel als technologischer Hintergrund beschrieben. Figur 5b zeigt dabei einen vergrößerten Ausschnitt von Figur 5a. Der Rotor 1 des Beispiels entspricht im Wesentlichen dem des ersten Beispiels, wobei im Unterschied dazu zur Verringerung der axialen Druckkräfte sowohl am federnden Bereich 6 ein Radius R ausgebildet ist als auch an der Anlagefläche 9 des Permanentmagneten 3. Hierdurch erfolgt eine Reduzierung der Hertzschen Pressung. Der Radius R reduziert die mechanischen Spannungsspitzen, die auf das Halteelement 4, 5 einwirken. Vorzugsweise sind die beiden Radien gleich groß und in gleicher Richtung liegend ausgebildet, sodass über die federnden Bereiche 6 der Halteelemente 4, 5 noch eine Zentrlerung des Permanentmagneten 3 bezüglich der Achse X-X erfolgt.

Durch die sich verjüngende Ausbildung der Anlagefläche 9 des Permanentmagneten 3 und der Anlagefläche der Halteelemente 4, 5 ist es möglich, den Permanentmagneten sowohl in axialer Richtung als auch in radialer Richtung zu positionieren und zu zentrieren. Die zur Axialachse X-X geneigten Anlagenflächen ermöglichen somit eine Doppelfunktion hinsichtlich der Zentrierung des Permanentmagneten. Es sei jedoch angemerkt, dass zur Verringerung der Hertzschen Pressung die Radien auch unterschiedlich gewählt werden können, wodurch eine Reduzierung von Verschleiß an den Kontaktflächen erreicht wird, die Bruchgefahr des Magneten verringert wird und Druckspitzen bzw. Materialermüdung verringert wird. Besonders bevorzugt wird der Radius an der Anlagefläche 9 des Permanentmagneten 3 dabei größer als der Radius R des federnden Bereichs gewählt. Es sei weiterhin angemerkt, dass die Anlageflächen zwischen den Permanentmagneten und den federnden Bereichen 6 auch beispielsweise als Konus oder anderweitig sich verjüngend ausgebildet sein können.

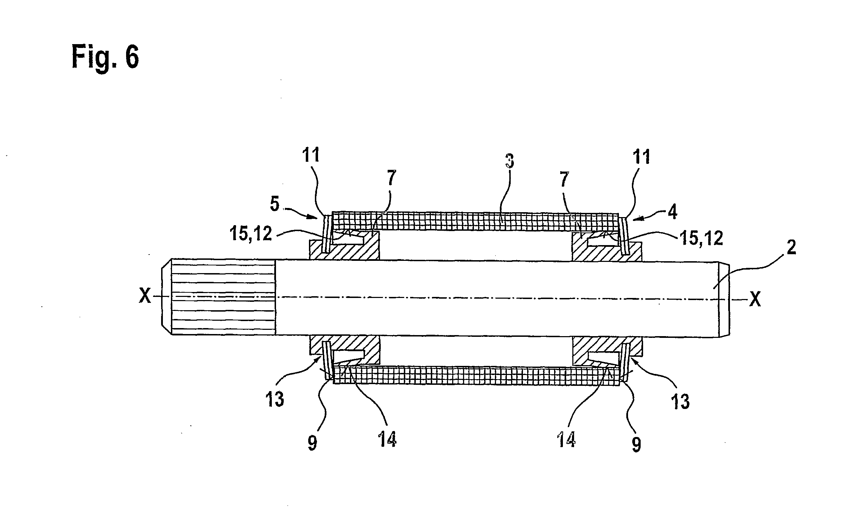

Nachfolgend wird unter Bezugnahme auf Figur 6 ein Rotor gemäß einem zweiten Ausführungsbeispiel der vorliegenden Erfindung beschrieben. Das zweite Ausführungsbeispiel ist ähnlich zum zweiten Beispiel. Die Halteelemente 4, 5 weisen zur axialen Zentrierung Tellerfedem 11 auf, welche an senkrechte Anlageflächen 9 des Permanentmagneten 3 angreifen. Zur radialen Zentrierung des Permanentmagneten 3 ist eine integral mit dem Haltebereich 7 gebildete Federbuchse 15 als Zentrierelement 12 ausgebildet, welche an einer an der radialen Innenseite des Permanentmagneten 3 gebildeten radialen Anlagefläche 14 anliegt. Die Federbuchse 15 kann beispielsweise auch mehrfach geschlitzt sein, sodass eine Vielzahl einzelner Federelemente zur Zentrierung des Permanentmagneten 3 vorhanden sind. Somit kann auf einfache Welse eine gleichzeitige elastische Lagerung in axialer und radialer Richtung bereitgestellt werden.

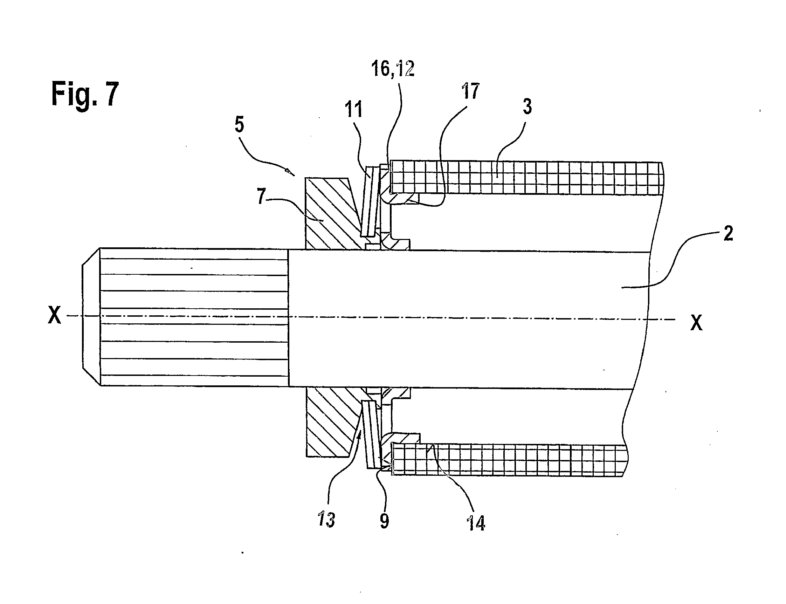

Figur 7 zeigt einen Rotor gemäß einem dritten Ausführungsbeispiel der vorliegenden Erfindung. Ähnlich wie der Rotor von Figur 6 zeigt der Rotor 1 gemäß diesem Ausführungsbeispiel eine Doppelfunktion des Zentrierens des Permanentmagneten 3 in Axialrichtung und in Radialrichtung. Zur Zentrierung in Axialrichtung sind axiale Federelemente 11 vorgesehen, welche in einer umlaufenden Nut 13 im Haltebereich 7 des Halteelements 5 angeordnet sind. Zwischen der Tellerfeder 11 und der Anlagefläche 9 des Permanentmagneten 3 ist weiterhin ein separates Zwischenelement 16 als Zentrierelement 12 des Halteelements 4 angeordnet. Das Zwischenelement 16 weist mehrere ausgestanzte und umgebogene Federbereiche 17 auf, welche mit der radialen Anlagenfläche 14 des Permanentmagneten 3 in Kontakt stehen. Die Federelemente 17 dienen zur radialen Zentrierung des Permanentmagneten 3. Das Zwischenelement 16 ist vorzugsweise aus einem Federstahl hergestellt und mittels einer Presspassung mit der Rotorwelle 2 verbunden. Somit stellt der in Figur 7 gezeigte Rotor 1 ebenfalls eine gleichzeitige Zentrierung des Permanentmagneten 3 in axialer und radialer Richtung bereit.

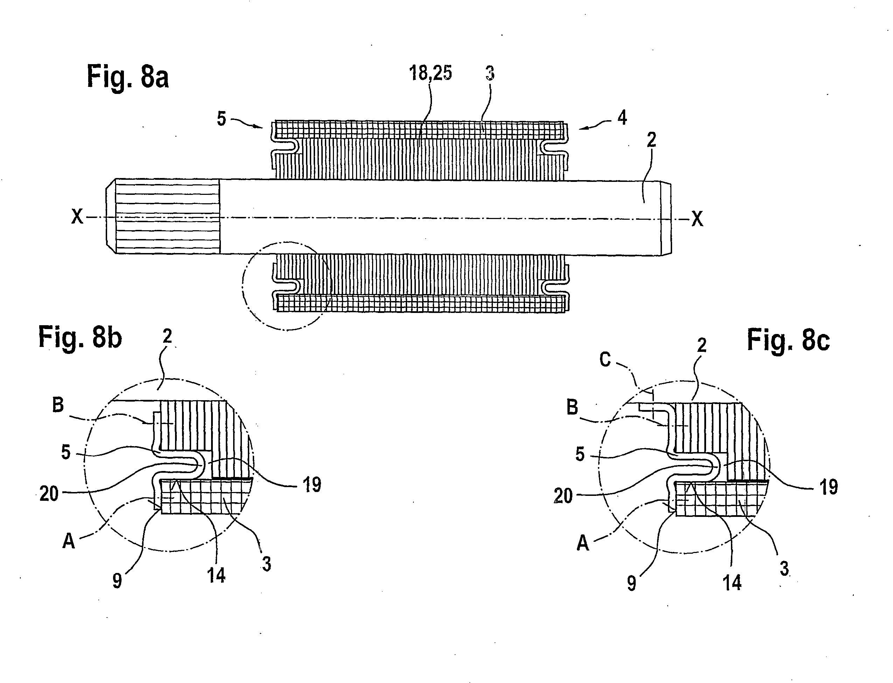

Die Fig. 8a bis 8f zeigen einen Rotor 1 gemäß einem vierten Ausführungsbeispiel der vorliegenden Erfindung, wobei in den Figuren 8c bis 8f Varianten der in den Figuren 8a und 8b gezeigten Ausführungsform dargestellt sind. Wie aus Figur 8a ersichtlich ist, umfasst der Rotor 1 gemäß dem vierten Ausführungsbeispiel eine Rotorwelle 2, an der ringförmig als Rotorkörper 25 ein Rotorlamellenpaket 18 angeordnet ist, das zum magnetischen Rückschluß des Permantentmagneten 3. dient. Ein Permanentmagnet 3 ist als Hohlzylinder ausgebildet und radial außerhalb des Rotorlamellenpakets 18 angeordnet. Der Permanentmagnete 3 wird mittels zweier an seinen in Axialrichtung liegenden Enden angeordneten elastischen Halteelementen 4 und 5 sowohl in Axialrichtung X-X als auch in Radialrichtung fedemd gelagert. Die elastischen Halteelemente 4, 5 können als Bestandteil, wie axiale Federelemente 11 und/oder Zentrierelemente 12, eines den Rotorkörper 25 umfassenden Gesamt-Halteteils (4, 5) beschrieben werden.

Die Halteelemente 4 und 5 sind aus Federblech hergestellt und können als ringförmig umlaufendes Halteelement oder als mehrere separate Halteelemente ausgebildet sein. Bei der in den Figuren 8a und 8b gezeigten Ausgestaltung ist an beiden axialen Endseiten des Rotorlamellenpakets 18 jeweils eine Aussparung 19 ausgebildet. Das Halteelement 5. ist dabei mit dem Permanentmagnet 3 an einem Bereich A fest verbunden und mit dem Rotorlamellenpaket 18 an einem Bereich B fest verbunden. Zur Verbindung zwischen dem Halteelement 5 und dem Permanentmagneten 3 bzw. dem Rotorlamellenpaket 18 können unterschiedliche Verfahren, wie z.B. Kleben, Reibschweißen, Kontaktschweißen, Laserschweißen usw., verwendet werden.

Wie insbesondere aus Figur 8b ersichtlich ist, ist das Halteelement 5 derart ausgebildet, dass es einen im Schnitt U-förmigen Federbereich 20 aufweist, welcher im Wesentlichen in der Aussparung 19 angeordnet ist. Dabei liegt der Permanentmagnet 3 lose auf der Außenseite des Federbereichs 20 auf. In gleicher Weise liegt der Federbereich 20 lose auf dem Rotorlamellenpaket auf. Dadurch kann das Halteeleffierit 5 Sowohl eine federnde Lagerung in Axialrichtung X-X als auch in Radialrichtung der Rotorwelle 2 ermöglichen.

Bei der in Figur 8c gezeigten Variante ist das Halteelement 5 zusätzlich noch an einem Bereich C mit der Ankerwelle 2 direkt verbunden. Dadurch wird zusätzlich noch das Rotorlamellenpaket 18 zur Rotorwelle 2 fixiert.

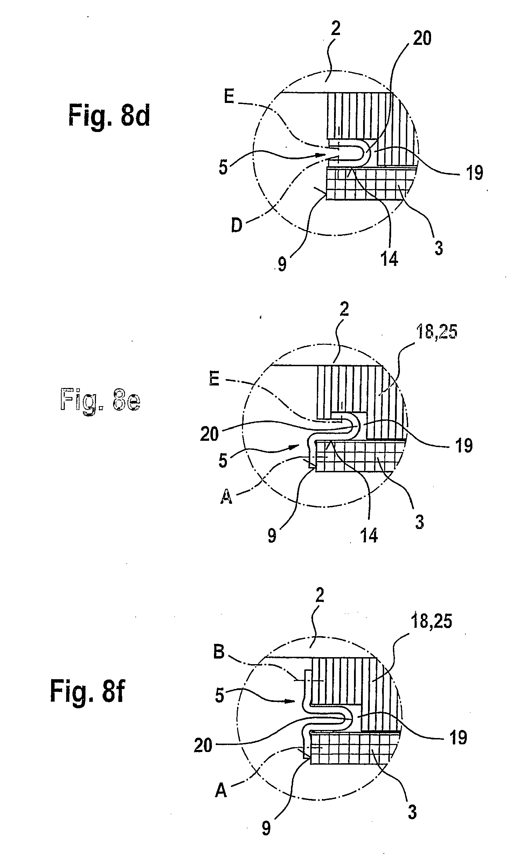

Bei der in Fig. 8d gezeigten Variante besteht das Halteelement 5 nur aus dem U-förmigen Federbereich 20. Dabei ist das Haltelement 5 an den Bereichen D bzw. E mit dem Permanentmagneten 3 bzw. dem Rotorlamellenpaket 18 verbunden. Diese Variante ist besonders kostengünstig und vorteilhaft, wenn hinsichtlich der Temperaturanforderungen und der Momentenübertragung nur ein geringerer Anspruch vorhanden ist.

Bei der in Figur 8e gezeigten Variante ist das Halteelement 5 mit dem Rotorlamellenpaket 18 an einem Punkt E fixiert. Dabei ist am Rotorlamellenpaket 18 noch ein Vorsprung 21 vorgesehen, welche eine formschlüssige Verbindung bereitstellt. Dabei kann auch vorgesehen sein, dass der Vorsprung 21 teilweise über das Halteelement 5 vorsteht, um eine Sicherung gegen ein Lösen des Halteelements 5 vom Rotorlamellenpaket 18 zu haben.

Bei der in Figur 8f gezeigten Variante ist das Halteelement 5 mit dem Permanentmagneten 3 über einen Verbindungsbereich A fest verbunden und das Rotorlamellenpaket 18 ist über einen Bereich B fest mit dem Halteelement 5 verbunden. Die in Figur 8f gezeigte Variante ist dabei sehr ähnlich zu der in Figur 8b gezeigten Variante, jedoch weist die Variante von Figur 8f einen Unterschied dahingehend auf, dass der im Schnitt U-förmige Federbereich 20 den Permanentmagneten 3 bzw. das Rotorlamellenpaket 18 nicht berührt. Dadurch wird ein zusätzlicher Freiheitsgrad hinsichtlich der Montage erhalten und ggf. bei der Herstellung der einzelnen Bauteile auftretenden Maßtoleranzen können einfacher ausgeglichen werden. Insbesondere kann bei diesem Ausführungsbeispiel auf eine aufwendige Nachbearbeitung des Innenumfangs des Permanentmagneten 3 verzichtet werden, da kein Einfluß der Toleranzen des Innendurchmessers auf den Gesamtrundlauf des Rotors besteht.

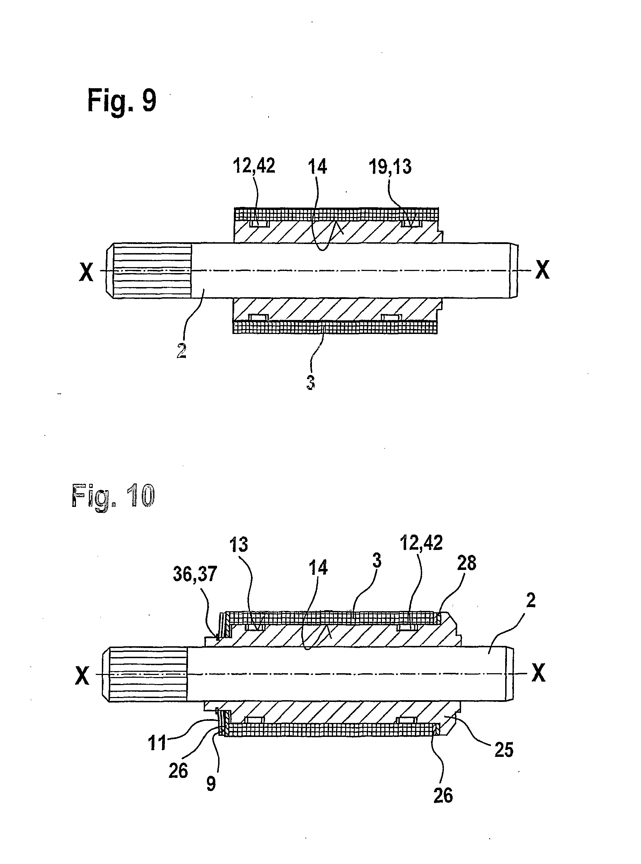

Figur 9 zeigt einen Rotor 1 mit einem auf einer Rotorwelle 2 drehfest gelagerten Rotorkörper 25 dessen Ausdehnungskoeffizient sich von dem des Permanent-Magnetrings 3 unterscheidet. Der Innendurchmesser des Permanent-Magnetrings 3 und der Außendurchmesser des Rotorkörpers 25 sind entsprechend einem Minimalspiel zwischen dem Rotorkörper 25 und dem Magnetring 3 im ungünstigsten Toleranz- und Betriebstemperaturbereich des Rotors 1 bemessen. Der Permanent-Magnetring 3 wird in diesem Ausführungsbeispiel der Erfindung ausschließlich durch radiale Zentrierelemente 12 auf den Rotorkörper 25 fixiert, indem die Zentrierelemente 12 mit einer vorbestimmten Anpresskraft gegen die radialen Anlageflächen 14 des Ringmagnets 3 gepresst werden. Durch diese radialen Anpresskräfte wird ebenfalls eine ungewollte axiale Verschiebung des Magnetrings 3 verhindert. Somit stellt in diesem Ausführungsbeispiel der Rotorkörper 25 mit den Zentrierelementen 12, ein Halteelement 4, 5 dar, in das die beiden Halteelemente 4, 5 gemäß Figur 1 integriert sind. Die Zentrierelemente 12 sind in Aussparungen 19 des Rotorkörpers 25 gelagert, und sind beispielsweise als gewellter Toleranzring 42, als Drahtfeder oder als Lamellenfedem 30 ausgebildet. Die Zentrierelemente 12 weisen eine flache Federkennlinie 50 in radialer Richtung zur Rotorwelle 2 auf, so dass auch bei größerem Toleranz-, bzw. Temperaturausdehnungs-Ausgleich die radialen Kräfte auf den Magnetring 3 nicht zu groß werden, um diesen vor einer Beschädigung zu schützen. Gleichzeitig stellt diese Art der Ringmagnetbefestigung einen Überlastschutz beim Übertragen von Drehmomenten mittels Reibschluss vom Rotor 1 auf die Ankerwelle 2 dar, dessen Überlast-Schwellwert durch die Zentrierelemente 12 in Verbindung mit den Anlagenflächen 14 festgelegt ist.

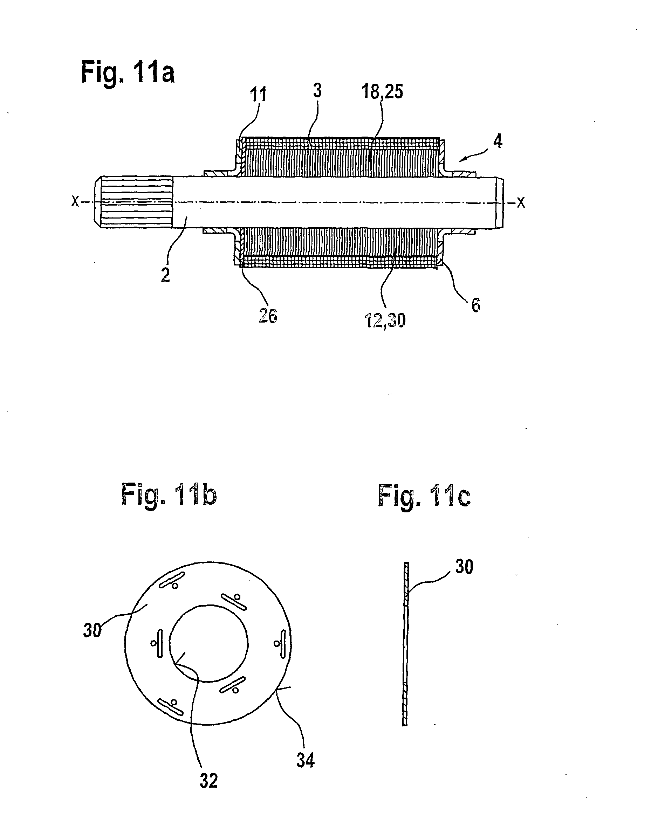

Der in Figur 10 dargestellte Rotor 1, mit den in den Rotorkörper 25 integrierten Halteelemente 4, 5 weist zusätzlich zu den Zentrierelementen 12 ein axiales Federelement 11 auf, dass hier als Tellerfeder 11 ausgebildet ist. Dazu ist an einem Ende des Rotorkörpers 25 als axiales Halteelement 4 ein fester Anschlag 28 angeformt, gegen den aufgrund der axialen Federkraft des Federelements 11, der Ringmagnet 3 gepresst wird. Zur Erhöhung der Drehmomentübertagung ist zwischen dem Federelement 11 und der axialen Anlagefläche 9, sowie zwischen dem festen Anschlag 28 und der zweiten Anlagefläche 9 eine Reibscheibe 26 angeordnet, deren Oberfläche entsprechend des gewünschten Reibschluss vorgegeben wird. Für einen hohen Reibwert kann beispielsweise eine Stahlscheibe 26 mit Korund oder Diamant beschichtet sein. Alternativ kann auch auf eine oder beide Reibscheiben 26 verzichtet werden, wenn beispielsweise nur geringe Drehmomente übertragen werden sollen. Das axiale Federelement 11 ist im erfindungsgemäßen Ausführungsbeispiel durch einen Sicherungsring 36, der von einer ringförmigen Nut 37 aufgenommen ist, axial gesichert. In einer Variation ist das axiale Federelement 11 direkt in einer axialen Ausnehmung 13 aufgenommen, wodurch der Sicherungsring 36 als zusätzliches Bauteil entfällt. Mittels solch einer Anordnung mit einem axialen Federelement 11 können auch axiale Vorspannkraftverluste, die aus unterschiedlichen Ausdehnungskoeffizienten resultieren, kompensiert werden. Der Rotorkörper 25 ist in Figur 10 und Figur 9 als einteilger Kunststoffkörper ausgebildet, dieser kann jedoch auch als magnetisches Rückschlusselement 18 ausgebildet sein, wie dies in Figur 11 dargestellt ist.

In Figur 11 sind die beiden Halteelemente 4 und 5 als Tellerfedern 11 ausgebildet und direkt auf der Rotorwelle 2 fest fixiert, beispielsweise aufgepresst. Diese beiden axialen Federelemente 11 kompensieren die Längentoleranzen der Ringmagnetherstellung, sowie dessen thermischer Ausdehnung. Zur radialen Zentrierung weisen die Halteelemente 4, 5, Zentrierelemente 12 auf, die hier als radiales Federpaket 18 ausgebildet sind, die gleichzeitig einen magnetischen Rückschluss für den Permanent-Magnetring 3 darstellen. Die Zentrierelemente 12 werden gemäß Figur 11b und 11c durch einzelne Feder-Lamellen 30 gebildet, die sich an ihrer Innenseite 32 direkt an der Ankerwelle 2 und mit ihrer Außenseite 34 an der radialen Anlagefläche 14 des Ringmagneten 3 abstützen. Optional weisen die Halteelemente 4, 5 als separate Bauteile ausgebildete Reibscheiben 26 auf, die zwischen den axialen Federelementen 11 und den axialen Anlageflächen 9 des Ringmagneten 3 angeordnet sind. Zur

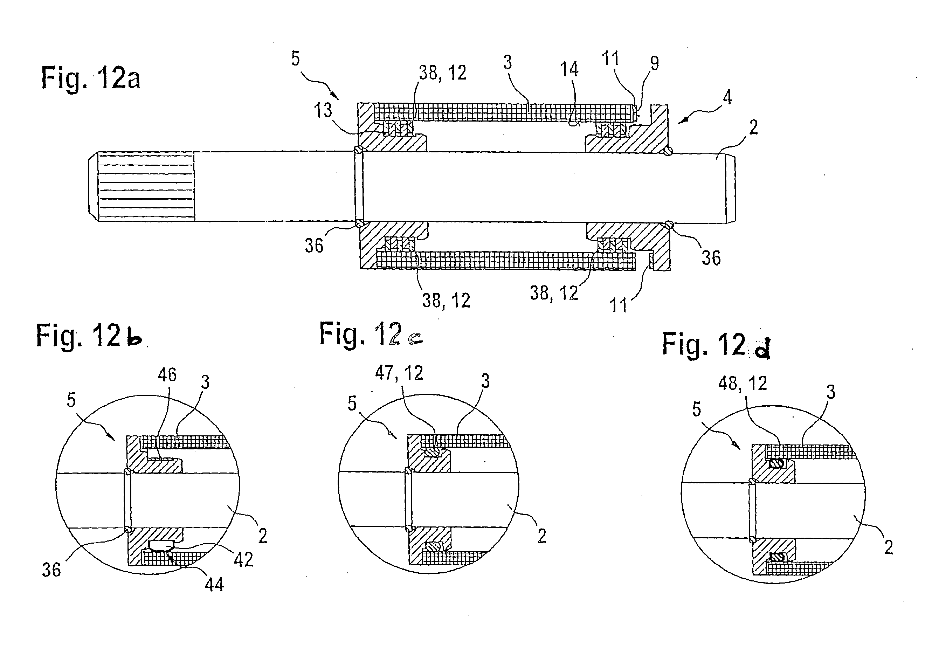

Die Figuren 12a bis 12d zeigen verschiedene Varianten eines erfindungsgemäßen Rotors 1, bei dem die elastische Lagerung des Permanent-Ringmagneten 3 in axiale und radiale Richtung jeweils durch separate Bauteile der Halteelemente 4, 5 realisiert ist. Zur Herstellung des Rotors 1 wird gemäß Figur 12a zuerst ein erstes Haltelement 5 mittels eines Sicherungsrings 36 direkt auf der Ankerwelle 2 fixiert. Auf einer Ausnehmung 13 des Halteelements 5 ist ein Zentrierelement 12 vormontiert, auf das der Ringmagnet 3 aufgeschoben wird. Zwischen der axialen Anlageflächen 9 und dem Halteelement 4 (und/oder 5) wird vor dessen Montage ein axiales Federelement 11 eingelegt, das die Wärmeausdehnung und Herstellungstoleranzen in axialer Richtung ausgleicht. Mittels eines zweiten Sicherungsrings 36, mit dem das Halteelement 4 fixiert wird, lässt sich die axiale Vorspannung des Federelements 11 einstellen. Die Zentrierelemente 12 weisen eine gleichbleibende Federrate mit einer flachen Federkennlinie 50 über den gesamten Betriebstemperaturbereich auf und bewirken somit, dass der Außenmantel des Permanent-Magnetrings 3 bei unterschiedlicher Temperaturausdehnungen und Herstellungstoleranzen der Einzelteile. immer exakt zur Achse X-X der Ankerwelle 2 zentriert bleibt. Damit ist ein optimaler Rundlauf bei kostengünstiger Herstellung des Rotors 1 gewährleistet. In Figur 12a sind die Zentrierelemente 12 als Spiralfedern 38 ausgebildet, deren einzelne Windungen zumindest im entspannten Zustand radial versetzt angeordnet sind.

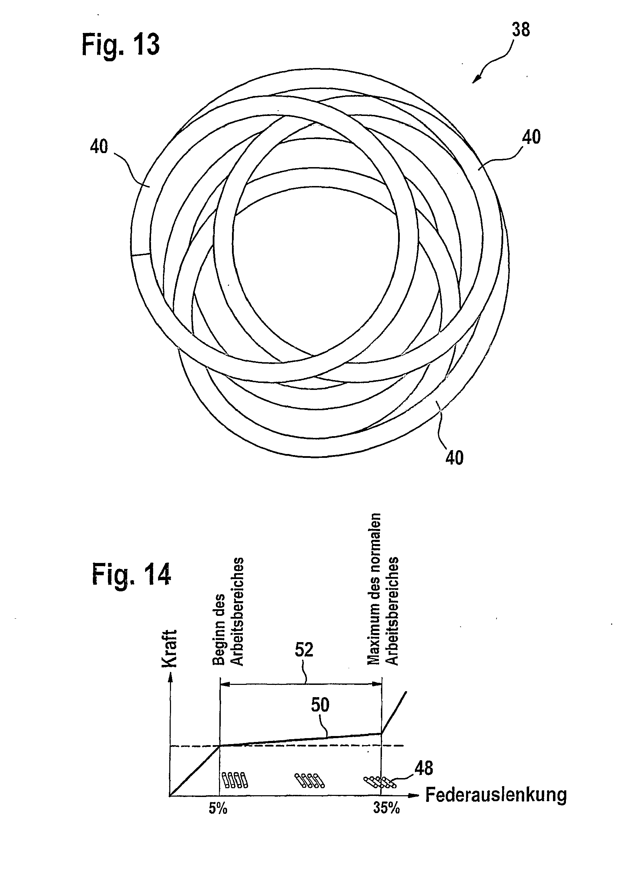

Eine solche erfindungsgemäße Spiralfeder 38 ist in Figur 13 als separates Bauteil dargestellt. Zur Herstellung einer solchen Spiralfeder 38 werden die axial aufeinanderfolgenden Windungen 40 abwechselnd in unterschiedliche radiale Richtungen ausgelenkt, so dass der neue Außendurchmesser der Spiralfeder 38 größer ist, als der Durchmesser einer einzelnen Windung 40 und der effektive Innendurchmesser geringer als der einer einzelnen Windung 40. Der Draht einer solchen Spiralfeder 38 weist beispielsweise ein Rechteckprofil auf und wird unter einer bestimmten axialen Vorspannung auf die Ausnehmung 13 der Halteelemente 4, 5 vormontiert.

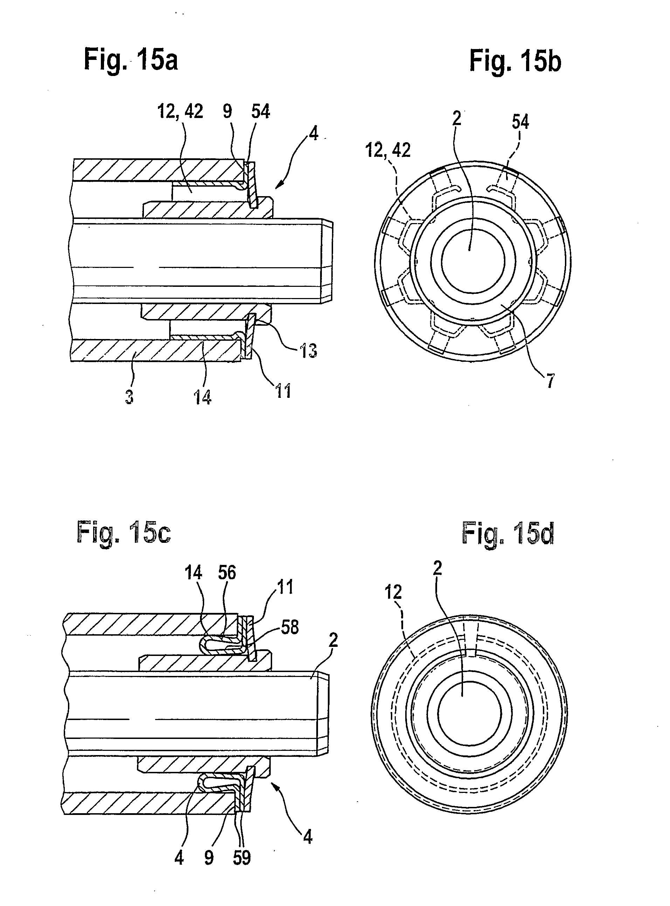

In einer Variation wird in Figur 12b anstelle der Spiralfeder 38 eine gewellte Flachfeder 42 verwendet, die ringförmig auf der Ausnehmung 13 montiert wird. Die gewellte Flachfeder 42 ist vorzugsweise als offener Ring ausgebildet, wie dies auch in Figur 15b - jedoch ohne radial überstehende Laschen 54 - in einer Seitenansicht dargestellt ist. Der gewellte Federring 42, der auch als handelsüblicher Toleranzring 42 ausgebildet sein kann, weist eine radiale Vorspannung auf, so dass dieser mit einigen Bereichen 44 an der radialen Anlagefläche 14 des Ringmagneten 3 und mit anderen Bereichen 46 am Halteelement 4, 5 anliegt. Für Anwendungen mit geringem Toleranzausgleich bzw. geringen Differenzen der Wärmeausdehnung ist in Figur 12c als Zentrierelement 12 ein handelsüblicher O-Ring 47 in der Ausnehmung 13 gelagert, um eine zentrierende Rückstellwirkung des Ringmagneten 3 zu gewährleisten.

in einer weiteren Variation gemäß Figur 12d sind die Zentrierelemente 12 als sogenannten Bal-Seal 48 ausgebindet. Eine solche Bal-Seal 48 weist ebenfalls eine Art Spiralfeder auf, deren Windungen jedoch nicht wie in Figur 12a radial, sondern wie in Figur 14 dargestellt axial gegeneinander verkippt werden. Dadurch weist eine solche Bal-Seal 48 eine sehr flache Federkennlinie 50 über einem gesamten nutzbaren Arbeitsbereich 52 auf, wodurch eine nahezu gleichbleibende Rückstellkraft auf den Magnetring 3 über den gesamten radialen Federweg der Zentrierelemente 12 gegeben ist. Eine solche flache Federkennlinie 50 mit nahezu konstanter Rückstellkraft, kann bei entsprechender Ausgestaltung auch durch die anderen genannten Ausführungen der Zentrierelemente 12 realisiert werden.

Die Zentrierelemente 12 gemäß Figur 12a bis 12d können in weiterer Variation auch auf einem die Halteelemente 4, 5 integrierenden Rotorkörper 12, oder direkt auf der Ankerwelle 2 gelagert sein.

Die Figuren 15a bis 15g zeigen weitere erfindungsgemäße Ausführungsbeispiele mit verschiedenen Varianten von Zentrierelementen 12. In Figur 15a ist als Zentrierelements 12 eine gewellte Flachfeder 42 - ähnlich wie in Figur 12b dargestellt - auf dem Halteefement 4 gelagert. Jedoch weist hier die gewählte Flachfeder 42 anders als in Figur 12b, radiale Fortsätze 54 auf, die an den axialen Anlageflächen 9 des Ringmagneten 3 anliegen. Bei der Montage des Ringmagneten 3 wird dieser durch die gewellte Flachfeder 42 zentriert, wobei die bei der Montage eingefrorenen Spannungen innerhalb der axialen noch nicht belasteten Fortsätze 54 sehr gering sind. Anschließend wird das Halteelement 4 mit der vormontierten Tellerfeder 11 axial auf die Ankerwelle 2 aufgeschoben, bis die radial äußeren Bereiche 23 der Tellerfeder 11 die Fortsätze 54 gegen die axiale Anlagefläche 9 des Ringmagneten 3 presst. Dadurch wird das Zentrierelement 22 im Bereich der Fortsätze 54 partiell versteift, wodurch eine genauere Fixierung über den gesamten Temperaturverlauf ermöglicht wird. Die axialen Federelemente 11 und die Halteelemente 4, 5 werden entweder kraft- oder formflüssig axial fixiert. In Figur 15b ist schematisch ein Schnitt durch die gewellte Flachfeder 42 dargestellt, wobei diese zur Aufbringung einer radialen Anpresskraft gegen die radiale Anlagefläche 14 in diesem Ausführungsbeispiel als offener Federring 42 ausgebildet ist.

Figur 15c zeigt eine Variation des Zentrierelements 12, dessen Querschnitt eine Art Schleife mit zwei Schenkeln 56 und 58 bildet, die einerseits an der radialen Anlagefläche 14 und andererseits am Halteelement 4 sich radial abstützen. In radialen Richtung weist dieses Zentrierelement 12, zwei übereinanderliegende Laschen 59 auf, die wiederum mittels der axialen Federelemente 11 gegen die axialen Anlageflächen 9 des Ringmagneten 3 gepresst werden. Figur 15d zeigt wiederum eine schematische Schnittdarstellung des Zentrierelements 12 aus Figur 12c.

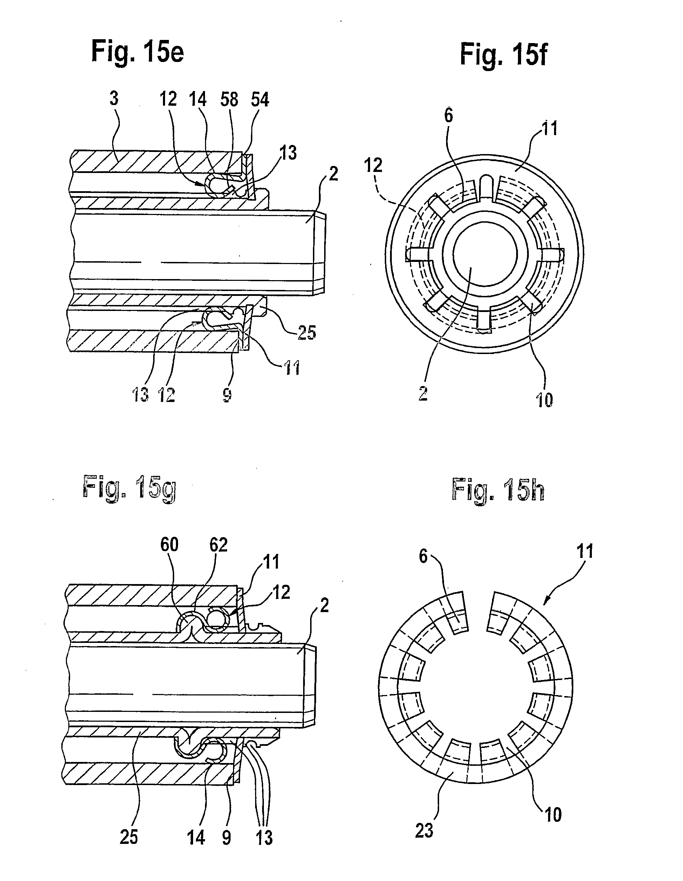

Figur 12e zeigt eine weitere Variation eines Zentrierelements 12, dessen Querschnitt eine axial offene Schleife mit einem Schenkel 58 bildet, der sich an mindestens einer Ausnehmung 13 an einem Rotorkörper 25 abstützt, der sich über dem gesamten radialen Bereich des Ringmagneten 3 erstreckt. Hierbei sind die Halteelemente 4 und 5 wieder integraler Bestandteil des Rotorkörpers 25. Auch in diesem Ausführungsbeispiel wird ein radialer Fortsatz 54 mittels axialen Federelementen 11 gegen die axiale Anlagefläche 9 gepresst, wodurch das Zentrierelement 12 partiell versteift wird. Figur 15f zeigt eine schematische Seitenansicht des Ausführungsbeispiels gemäß Figur 15e, wobei das Zentrierelement 12 zur besseren radialen Anpassung wiederum als offener Ring ausgebildet ist.

In einer weiteren Ausführungsform eines erfindungsgemäßen Rotors 1 gemäß Figur 15g, weist ein Rotorkörper 25 einen ringförmigen Wulst 60 auf, auf dem mit einer entsprechenden Gegenausformung 62 ein Zentrierring 12 angeordnet ist. Der Zentrierring 12 weist ähnlich wie in Figur 12e wieder im Querschnitt eine offene Schleife auf, deren Schenkel 56 und 58 sich an der axialen Anlagefläche 14 und am in den Rotorkörper 25 integrierten Halteelement 4, 5 abstützen. Da das zentrierelement 12 am Wulst 60 räumlich fixiert ist, bedarf dieses keiner weiteren Befestigung durch das axiale Federelements 11, das sich im Ausführungsbeispiel an variabel angeordneten ringförmigen Nuten 13 an den Halteelemente 4 und 5 abstützt. Figur 15h zeigt als axiales Federelement 11 eine Tellerfeder 11, mit axialen Schlitzen 10 zwischen den federnden Bereichen 6, wobei hier die federnden Bereiche 6 radial zur Ankerwelle 2 hin ausgebildet sind, im Gegensatz zu den radial nach außen angeordneten federnden Bereichen 6 des Beispiels nach Figur 1.

Es sei angemerkt, dass hinsichtlich der In allen Figuren gezeigten erfindungsgemäße Ausführungsbeispiele vielfältige Kombinationsmöglichkeiten untereinander im Rahmen der Zugehörigen Ansprüche möglich sind. Insbesondere können die dargestellten unterschiedlichen axialen Lagerungen des Permaneritmagneten 3 und die unterschiedlichen radialen Lagerungsmöglichkeiten des Permanentmagneten 3, sowie insbesondere die unterschiedliche Ausbildung der Halteelemente 4, 5 in beliebiger Weise miteinander kombiniert werden.

## Patentansprüche

1. Elektrische Maschine mit einem Rotor (1) und einem Stator, wobei ein Permanentmagnet (3) am Rotor (1) angeordnet ist, **dadurch gekennzeichnet, dass** der Permanentmagnet (3) im Wesentlichen als Hohlzylinder mit axialen und/oder radialen Anlageflächen (9, 14) ausgebildet ist und an den axialen und/oder radialen Anlageflächen (9, 14) mittels Halteelementen (4, 5) am Rotor (1) befestigt ist, wobei der Permanentmagnet (3) mittels der Halteelemente (4, 5) in Radialrichtung des Rotors (1) elastisch gelagert ist, wobei die Halteelemente (4, 5) Zentrierelemente (12) mit einer über den gesamten Temperaturbereich flach verlaufenden, in etwa linearen Federkennlinie (50) aufweisen, die bei unterschiedlichen Temperaturausdehnungen und Herstellungstoleranzen der Einzelteile eine zentrierende Rücksteilwirkung des Permanentmagneten (3) in radialer Richtung bezüglich der Axialachse (X-X) gewährleisten.

2. Elektrische Maschine nach Anspruch 1, **dadurch gekennzeichnet, dass** der Permanentmagnet (3) an seinen in Axialrichtung (X-X) und/oder in Radialrichtung liegenden Anlageflächen (9, 14) jeweils mittels eines Halteelements (4, 5) - insbesondere zwischen zwei axial angeordneten Halteelementen (4, 5) - am Rotor (1) befestigt ist.

3. Elektrische Maschine nach Anspruch 1 oder 2, **dadurch gekennzeichnet, dass** die Halteelemente (4, 5) einen integral gebildeten federnden Bereich (6, 20) aufweisen.

4. Elektrische Maschine nach einem der vorhergehenden Ansprüche, **dadurch gekennzeichnet, dass** der federnde Bereich (6) an in Radialrichtung äußeren Umfangsabschnitten der Halteelemente (4, 5) angeordnet ist, um axiale Anlageflächen (9) des Permanentmagneten (3) abzustützen.

5. Elektrische Maschine nach einem der vorhergehenden Ansprüche, **dadurch gekennzeichnet, dass** die Halteelemente (4, 5) in Radialrichtung verlaufende Schlitze (10) aufweisen, um einzelne federnde Bereiche (6) zu bilden.

6. Elektrische Maschine nach Anspruch 1, **dadurch gekennzeichnet, dass** das Halteelement (4, 5) axiale Federelemente (11) - insbesondere Tellerfedern (11) - zur elastischen Lagerung des Permanentmagneten (3) aufweist.

7. Elektrische Maschine nach einem der vorhergehenden Ansprüche, **dadurch gekennzeichnet, dass** eine Anlagefläche der Halteelemente (4, 5) und/oder eine Anlagefläche (9) des Permanentmagneten (3) sich verjüngend ausgebildet ist

8. Elektrische Maschine nach einem der vorhergehenden Ansprüche, **dadurch gekennzeichnet, dass** eine Anlagefläche des Halteelements (4, 5) als gewölbter Bereich mit einem vorbestimmten Radius (R) ausgebildet ist.

9. Elektrische Maschine nach einem der vorhergehenden Ansprüche, **gekennzeichnet durch** ein zusätzliches scheibenförmiges Reibelement (26), insbesondere aus Filzmaterial, welches zwischen den Anlagenflächen (9, 14) des Permanentmagneten (3) und den Halteelementen (4, 5) angeordnet ist.

10. Elektrische Maschine nach einem der vorhergehenden Ansprüche, **dadurch gekennzeichnet, dass** das scheibenförmiges Reibelement (26) oder die Halteelemente (4,5) eine mit Korund oder Diamant beschichtete Stahlfläche (28, 29)3 aufweisen.

11. Elektrische Maschine nach einem der vorhergehenden Ansprüche, **dadurch gekennzeichnet, dass** die Anlagefläche (9, 14) des Permanentmagneten (3) und/oder die Anlagefläche der Halteelemente (4, 5) eine verschleißfeste und/oder reiberhöhende Beschichtung aufweisen.

12. Elektrische Maschine nach einem der vorhergehenden Ansprüche, **dadurch gekennzeichnet, dass** die flache Federkennlinie (50) über einem gesamten nutzbaren Arbeitsbereich (52) ausgebildet ist, wodurch eine nahezu gleichbleibende Rückstellkraft auf den Magnetring (3) über den gesamten radialen Federweg der Zentrierelemente (12) gegeben ist.

13. Elektrische Maschine nach einem der vorhergehenden Ansprüche, **dadurch gekennzeichnet, dass** das Zentrierelement (12) als offener oder geschlossener Federring, Drahtfeder, Lamellenfeder (18), Spiralfeder (38), umlaufend gewellte Flachfeder (42), Toleranzring, druckelastischer O-Ring (47) oder als bal-seal (48) ausgebildet ist.

14. Elektrische Maschine nach einem der vorhergehenden Ansprüche, **dadurch gekennzeichnet, dass** die Spiralfeder (38) einzelne Windungen (40) aufweist, die sowohl radial als auch axial versetzt angeordnet sind.

15. Elektrische Maschine nach einem der vorhergehenden Ansprüche, **dadurch gekennzeichnet, dass** das Zentrierelement (12, 42) eine axiale Reibfläche - insbesondere einstückig angeformte radiale Fortsätze (54) - aufweist, die von dem axialen Federelement (11) gegen die axiale Anschlagfläche (9) des Permanentmagneten (3) gepreßt wird.

16. Elektrische Maschine nach einem der vorhergehenden Ansprüche, **dadurch gekennzeichnet, dass** der Rotor (2) einen Rotorkörper (25) aufweist, der zwischen einer Rotorwelle (2) und dem Permanentmagneten (3) angeordnet ist und insbesondere als Rückschlußelement (18) des Permanentmagneten (3) ausgebildet ist.

17. Elektrische Maschine nach einem der vorhergehenden Ansprüche, **dadurch gekennzeichnet, dass** die Halteelemente (4, 5) in den Rotorkörper (25) integriert sind.

18. Elektrische Maschine nach einem der vorhergehenden Ansprüche, **dadurch gekennzeichnet, dass** die in den Rotorkörper (25) integrierte Halteelemente (4,5) mindestens einen festen axialen Anschlag (28) und einen axial elastisch beweglichen Anschlag (29) bilden.

19. Elektrische Maschine nach einem der vorhergehenden Ansprüche, **dadurch gekennzeichnet, dass** die Halteelemente (4, 5) oder der Rotorkörper (25) umlaufende, ringförmige Ausformungen (13, 19) zur Aufnahme der axialen Federelemente (11) und/oder der Zentrierelemente (12) aufweisen.

20. Elektrische Maschine nach einem der vorhergehenden Ansprüche, **dadurch gekennzeichnet, dass** die Halteelemente (4, 5) und/oder der Rotorkörper (25) auf der Rotorwelle (2) mittels Sicherungsringen (36), Federelementen, Laserschweißen, Kleben oder Schrumpfpassung fixiert sind.

21. Elektrische Maschine nach einem der vorhergehenden Ansprüche, **dadurch gekennzeichnet, dass** der Rotorkörper (25) als radiales und/oder axiales Federpaket (18) ausgebildet ist.

22. Elektrische Maschine nach einem der vorhergehenden Ansprüche, **dadurch gekennzeichnet, dass** die Halteelemente (4, 5) als Reibkupplung einer Drehmomentübertragung ausgebildet sind, deren Überlast-Schwellwert mittels der Federkraft und der Reibflächen vorgebbar ist.

## Claims

1. Electrical machine having a rotor (1) and a stator, wherein a permanent magnet (3) is arranged on the rotor (1), **characterized in that** the permanent magnet (3) is substantially in the form of a hollow cylinder having axial and/or radial bearing surfaces (9, 14) and is attached to the rotor (1) at the axial and/or radial bearing surfaces (9, 14) by means of holding elements (4, 5), wherein the permanent magnet (3) is elastically mounted in the radial direction of the rotor (1) by means of the holding elements (4, 5), wherein the holding elements (4, 5) have centring elements (12) with an approximately linear spring characteristic curve (50) which runs flat over the entire temperature range, said centring elements ensuring a centring restoring effect of the permanent magnet (3) in the radial direction in relation to the axial axis (X-X) given different temperature expansions and manufacturing tolerances of the individual parts.

2. Electrical machine according to Claim 1, **characterized in that** the permanent magnet (3) is attached to the rotor (1) at its bearing faces (9, 14) which are situated in the axial direction (X-X) and/or in the radial direction in each case by means of a holding element (4, 5) - in particular between two axially arranged holding elements (4, 5).

3. Electrical machine according to Claim 1 or 2, **characterized in that** the holding elements (4, 5) have an integrally formed resilient region (6, 20).

4. Electrical machine according to one of the preceding claims, **characterized in that** the resilient region (6) is arranged on circumferential sections of the holding elements (4, 5) which run on the outside in the radial direction, in order to support axial bearing faces (9) of the permanent magnet (3).

5. Electrical machine according to one of the preceding claims, **characterized in that** the holding elements (4, 5) have slots (10) which run in the radial direction, in order to form individual resilient regions (6).

6. Electrical machine according to Claim 1, **characterized in that** the holding element (4, 5) has axial spring elements (11) - in particular plate springs (11) - for elastically mounting the permanent magnet (3).

7. Electrical machine according to one of the preceding claims, **characterized in that** a bearing face of the holding elements (4, 5) and/or a bearing face (9) of the permanent magnet (3) is tapered.

8. Electrical machine according to one of the preceding claims, **characterized in that** a bearing face of the holding element (4, 5) is in the form of a curved region with a predetermined radius (R).

9. Electrical machine according to one of the preceding claims, **characterized by** an additional disc-like friction element (26), in particular composed of felt material, which is arranged between the bearing faces (9, 14) of the permanent magnet (3) and the holding elements (4, 5).

10. Electrical machine according to one of the preceding claims, **characterized in that** the disc-like friction element (26) or the holding elements (4, 5) has/have a steel face (28, 29) which is coated with aluminium oxide or diamond.

11. Electrical machine according to one of the preceding claims, **characterized in that** the bearing face (9, 14) of the permanent magnet (3) and/or the bearing face of the holding elements (4, 5) have/has a wear-resistant and/or friction-increasing coating.

12. Electrical machine according to one of the preceding claims, **characterized in that** the flat spring characteristic curve (50) is formed over an entire usable operating range (52), this resulting in a virtually constant restoring force on the magnet ring (3) over the entire radial spring path of the centring elements (12).

13. Electrical machine according to one of the preceding claims, **characterized in that** the centring element (12) is in the form of an open or closed spring ring, wire spring, lamellar spring (18), helical spring (38), circumferentially corrugated flat spring (42), tolerance ring, compressively elastic O-ring (47) or in the form of a Bal seal (48).

14. Electrical machine according to one of the preceding claims, **characterized in that** the helical spring (38) has individual turns (40) which are arranged offset both in the radial direction and in the axial direction.

15. Electrical machine according to one of the preceding claims, **characterized in that** the centring element (12, 42) has an axial friction face - in particular integrally formed radial projections (54) - which is pressed against the axial stop face (9) of the permanent magnet (3) by the axial spring element (11).

16. Electrical machine according to one of the preceding claims, **characterized in that** the rotor (2) has a rotor body (25) which is arranged between a rotor shaft (2) and the permanent magnet (3) and, in particular, is in the form of a return-path element (18) of the permanent magnet (3).

17. Electrical machine according to one of the preceding claims, **characterized in that** the holding elements (4, 5) are integrated in the rotor body (25).

18. Electrical machine according to one of the preceding claims, **characterized in that** the holding elements (4, 5) which are integrated in the rotor body (25) form at least a fixed axial stop (28) and an axially elastically movable stop (29).

19. Electrical machine according to one of the preceding claims, **characterized in that** the holding elements (4, 5) or the rotor body (25) have/has circumferential, annular shaped portions (13, 19) for receiving the axial spring elements (11) and/or the centring elements (12).

20. Electrical machine according to one of the preceding claims, **characterized in that** the holding elements (4, 5) and/or the rotor body (25) are/is fixed on the rotor shaft (2) by means of securing rings (36), spring elements, laser welding, adhesive bonding or shrink-fitting.

21. Electrical machine according to one of the preceding claims, **characterized in that** the rotor body (25) is in the form of a radial and/or axial spring assembly (18).

22. Electrical machine according to one of the preceding claims, **characterized in that** the holding elements (4, 5) are in the form of a friction clutch of a torque transmission means, it being possible to predefine the overload threshold value of said torque transmission means by means of the spring force and the friction faces.

## Revendications

1. Machine électrique comprenant un rotor (1) et un stator, un aimant permanent (3) étant disposé sur le rotor (1), **caractérisée en ce que** l'aimant permanent (3) est réalisé essentiellement sous forme de cylindre creux avec des surfaces d'appui (9, 14) axiales et/ou radiales et est fixé sur le rotor (1) au niveau des surfaces d'appui axiales et/ou radiales (9, 14) au moyen d'éléments de retenue (4, 5), l'aimant permanent (3) étant monté élastiquement au moyen des éléments de retenue (4, 5) dans la direction radiale du rotor (1), les éléments de retenue (4, 5) présentant des éléments de centrage (12) avec une caractéristique de ressort approximativement linéaire (50) s'étendant à plat sur toute la plage de températures, lesquels éléments de centrage, en cas de dilatations thermiques et de tolérances de fabrication différentes des pièces détachées, garantissent un effet de rappel avec centrage de l'aimant permanent (3) dans la direction radiale par rapport à l'axe axial (X-X).

2. Machine électrique selon la revendication 1, **caractérisée en ce que** l'aimant permanent (3) est fixé sur le rotor (1) au niveau de ses surfaces d'appui (9, 14) situées dans la direction axiale (X-X) et/ou dans la direction radiale, à chaque fois au moyen d'un élément de retenue (4, 5) - en particulier entre deux éléments de retenue (4, 5) disposés axialement.

3. Machine électrique selon la revendication 1 ou 2, **caractérisée en ce que** les éléments de retenue (4, 5) présentent une région élastique (6, 20) formée intégralement.

4. Machine électrique selon l'une quelconque des revendications précédentes, **caractérisée en ce que** la région élastique (6) est disposée sur des portions périphériques, extérieures dans la direction radiale, des éléments de retenue (4, 5), afin de supporter des surfaces d'appui axiales (9) de l'aimant permanent (3).

5. Machine électrique selon l'une quelconque des revendications précédentes, **caractérisée en ce que** les éléments de retenue (4, 5) présentent des fentes s'étendant dans la direction radiale (10) afin de former des régions élastiques individuelles (6).

6. Machine électrique selon la revendication 1, **caractérisée en ce que** l'élément de retenue (4, 5) présente des éléments de ressorts axiaux (11) - en particulier des ressorts Belleville (11) - en vue du support élastique de l'aimant permanent (3).

7. Machine électrique selon l'une quelconque des revendications précédentes, **caractérisée en ce qu'**une surface d'appui des éléments de retenue (4, 5) et/ou une surface d'appui (9) de l'aimant permanent (3) est/sont réalisée(s) en se rétrécissant.

8. Machine électrique selon l'une quelconque des revendications précédentes, **caractérisée en ce qu'**une surface d'appui de l'élément de retenue (4, 5) est réalisée sous forme de région cintrée avec un rayon prédéterminé (R).

9. Machine électrique selon l'une quelconque des revendications précédentes, **caractérisée par** un élément de friction en forme de disque supplémentaire (26), en particulier en feutre, qui est disposé entre les surfaces d'appui (9, 14) de l'aimant permanent (3) et les éléments de retenue (4, 5).

10. Machine électrique selon l'une quelconque des revendications précédentes, **caractérisée en ce que** l'élément de friction en forme de disque (26) ou les éléments de retenue (4, 5) présentent une surface en acier (28, 29) revêtue de corindon ou de diamant.

11. Machine électrique selon l'une quelconque des revendications précédentes, **caractérisée en ce que** la surface d'appui (9, 14) de l'aimant permanent (3) et/ou la surface d'appui des éléments de retenue (4, 5) présente(nt) un revêtement résistant à l'usure et/ou augmentant la friction.

12. Machine électrique selon l'une quelconque des revendications précédentes, **caractérisée en ce que** la caractéristique de ressort plate (50) est réalisée sur une plage de travail utile totale (52), de sorte qu'une force de rappel pratiquement uniforme est appliquée à la bague magnétique (3) par le biais de la course de ressort radiale totale des éléments de centrage (12).

13. Machine électrique selon l'une quelconque des revendications précédentes, **caractérisée en ce que** l'élément de centrage (12) est réalisé sous forme de bague élastique ouverte ou fermée, de ressort en fil métallique, de ressort à lamelles (18), de ressort spiral (38), de ressort plat enroulé circonférentiellement (42), de bague de tolérance, de joint torique élastique en pression (47) ou sous forme de joint Bal Seal (48).

14. Machine électrique selon l'une quelconque des revendications précédentes, **caractérisée en ce que** le ressort spiral (38) présente des enroulements individuels (40) qui sont disposés de manière décalée à la fois radialement et axialement.

15. Machine électrique selon l'une quelconque des revendications précédentes, **caractérisée en ce que** l'élément de centrage (12, 42) présente une surface de friction axiale - en particulier des saillies radiales (54) formées d'une seule pièce - qui est pressée par l'élément de ressort axial (11) contre la surface de butée axiale (9) de l'aimant permanent (3).

16. Machine électrique selon l'une quelconque des revendications précédentes, **caractérisée en ce que** le rotor (2) présente un corps de rotor (25), qui est disposé entre un arbre de rotor (2) et l'élément permanent (3) et qui est notamment réalisé sous forme d'élément de culasse (18) de l'aimant permanent (3).

17. Machine électrique selon l'une quelconque des revendications précédentes, **caractérisée en ce que** les éléments de retenue (4, 5) sont intégrés dans le corps de rotor (25).

18. Machine électrique selon l'une quelconque des revendications précédentes, **caractérisée en ce que** les éléments de retenue (4, 5) intégrés dans le corps de rotor (25) forment au moins une butée axiale fixe (28) et une butée déplaçable axialement et élastiquement (29).

19. Machine électrique selon l'une quelconque des revendications précédentes, **caractérisée en ce que** les éléments de retenue (4, 5) ou le corps de rotor (25) présente(nt) des formations annulaires périphériques (13, 19) pour recevoir les éléments de ressorts axiaux (11) et/ou les éléments de centrage (12).

20. Machine électrique selon l'une quelconque des revendications précédentes, **caractérisée en ce que** les éléments de retenue (4, 5) et/ou le corps de rotor (25) sont fixés sur l'arbre de rotor (2) au moyen de bagues de fixation (36), d'éléments de ressort, de soudage au laser, de collage ou d'ajustement par frettage.

21. Machine électrique selon l'une quelconque des revendications précédentes, **caractérisée en ce que** le corps de rotor (25) est réalisé sous forme de paquet de ressorts (18) radial et/ou axial.

22. Machine électrique selon l'une quelconque des revendications précédentes, **caractérisée en ce que** les éléments de retenue (4, 5) sont réalisés sous forme d'embrayage à friction d'un transfert de couple, dont la valeur seuil de surcharge peut être prédéfinie au moyen de la force de ressort et des surfaces de friction.
